# EUROPEAN PATENT APPLICATION

(11) **EP 3 511 070 A1**
(43) Date of publication of application: **17.07.2019**
(21) Application number: 18213742.2
(22) Date of filing: 27.11.2013
(51) Int. Cl.: B01J 21/06, B01J 23/656, B01J 27/187, C08F 8/04

(54) **CATALYST COMPOSITION, METHOD FOR HYDROGENATING STYRENIC BLOCK COPOLYMERS, AND HYDROGENATED POLYMER**

(30) Priority: 30.09.2013 TW 102135281
(62) Divisional of application: 13194645.1
(71) Applicant: TSRC Corporation, Taipei 106 (TW)
(72) Inventor: HSU, Chih-Wei, 106 Taipei (TW); LO, Man-Yin, 106 Taipei (TW); CHEN, Yin-Chieh, 106 Taipei (TW)
(74) Representative: Fuchs Patentanwälte Partnerschaft mbB

(57) **Abstract**

A catalyst composition, a method for hydrogenating styrenic block copolymer employing the same, and a hydrogenated polymer from the method are provided. The method for hydrogenating styrenic block copolymer includes subjecting a hydrogenation process to a styrenic block copolymer in the presence of a catalyst composition. In particular, the catalyst composition includes an oxide carrier, and a catalyst disposed on the oxide carrier, wherein the catalyst includes a platinum-and-rhenium containing phosphorus compound.

## Description

### CROSS REFERENCE TO RELATED APPLICATIONS

This application is based upon and claims the benefit of priority from prior Taiwan Patent Application No. 102135281, filed on Sep. 30, 2013, the entire contents of which are incorporated herein by reference.

### BACKGROUND

### Technical Field

The technical field relates to a catalyst composition for hydrogenating copolymer.

### Related Art

In the industries, the conjugated diene monomers are homo-polymerized or copolymerized to form polymers with unsaturated alkenyl groups in their molecular chains. However, the existence of a large amount of these unsaturated double bonds result in poor performances interms of weather resistance, heat resistance and anti-oxidation. These conditions become severe for those polymers, such as a polymer formed by copolymerizing the conjugated diene monomers and vinyl aromatic hydrocarbon monomers, and more severe when used with the modifiers of styrene resins and alkenyl resins and with impact resistant materials. These copolymers find limited application as outdoor materials.

For the polymers formed by polymerizing the conjugated diene monomers and vinyl aromatic hydrocarbon monomers, the drawbacks of poor performances of weather resistance, heat resistance and anti-oxidation for these polymers can be improved by a hydrogenation method to largely reduce the unsaturated double bonds.

Although many catalyst compositions have been used for hydrogenating unsaturated alkenyl groups of a copolymer, the hydrogenation rate of the vinyl aromatic hydrocarbon block of the copolymer cannot be easily controlled.

Accordingly, a novel catalyst and method for selectively controlling the hydrogenation rate of a vinyl aromatic hydrocarbon block of a copolymer are called for.

### SUMMARY

An embodiment of the disclosure provides a catalyst composition for hydrogenating a styrenic block copolymer. The catalyst composition includes an oxide carrier and a catalyst disposed on the oxide carrier. Particularly, the catalyst includes a platinum-and-rhenium containing phosphorus compound.

According to some embodiments of the disclosure, a method for hydrogenating styrenic block copolymer is provided. The method includes subjecting a styrenic block copolymer to a hydrogenation process in the presence of a catalyst composition, wherein the catalyst composition comprises an oxide carrier, and a catalyst disposed on the oxide carrier, and wherein the catalyst comprises a platinum-and-rhenium containing phosphorus compound.

According to some embodiments of the disclosure, a hydrogenated polymer is provided. The hydrogenated polymer includes a product fabricated by the following steps: subjecting a styrenic block copolymer to a hydrogenation process in the presence of a catalyst composition, obtaining the hydrogenated polymer. In particular, the catalyst composition includes an oxide carrier, and a catalyst disposed on the oxide carrier, wherein the catalyst include platinum-and-rhenium containing phosphorus compound.

A detailed description is given in the following embodiments with reference to the accompanying drawings.

### BRIEF DESCRIPTION OF THE DRAWINGS

The disclosure can be more fully understood by reading the subsequent detailed description and examples with references made to the accompanying drawings, wherein:

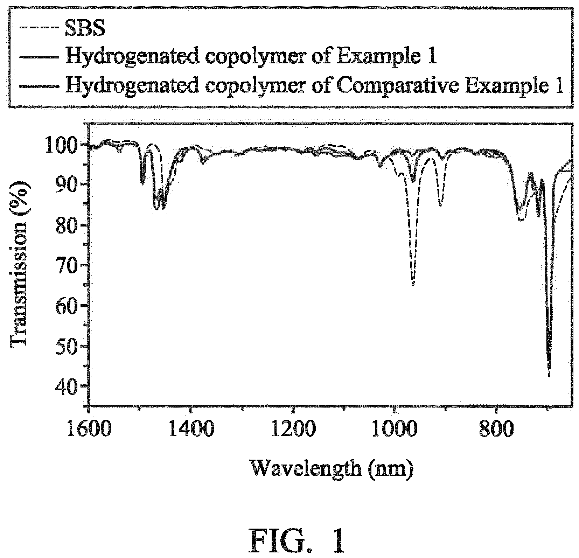

Fig. 1 shows infrared spectra of the styrene-butadiene-styrene (SBS) copolymers of Example 1 and comparative Example 1 before and after the hydrogenation process.

### DETAILED DESCRIPTION

An embodiment of the disclosure provides a catalyst composition, and the catalyst composition can be used in a non-homogeneous catalyst system with high reactivity and hydrogenation selectivity, for hydrogenating a styrenic block copolymer. The catalyst composition includes: an oxide carrier; and, a catalyst disposed on the oxide carrier, wherein the catalyst includes platinum-and-rhenium containing phosphorus compound.

The method for preparing the catalyst composition includes the following steps. First, a platinum-containing compound (such as chloroplatinic acid (H₂PtCl₆)), and a rhenium-containing compound (such as perrhenic acid (HReO₄)) is mixed with an oxide carrier to obtain a mixture, wherein the oxide carrier can be titanium oxide, aluminum oxide, zirconium oxide, or a combination thereof. Next, the mixture is dissolved in a solvent (such as DI eater). After stirring, the pH value of the result is adjusted to 11-12, obtaining a first solution. Next, a hypophosphite (NaH₂PO₂ • H₂O) is dissolved in a DI water, and the pH value of the result is adjusted to 11-12, obtaining a second solution. Next, the first solution is mixed with the second solution to obtain a solution, and the pH value of the result is maintained at 11-12. After stirring, the solution is heated at 90°C for 10-20hrs. Finally, the result is filtrated and the precipitate is collected. After drying the precipitate at 100∼105°C, the catalyst composition (i.e. platinum-and-rhenium containing phosphorus compound disposed on oxide carrier), wherein the ratio between the platinum and rhenium in the catalyst is from 10:1 to 1:1. In another embodiment of the disclosure, the catalyst has a weight percentage of between 0.5-9 wt%, based on the weight of the catalyst composition.

According to embodiments of the disclosure, the disclosure provides a method for hydrogenating styrenic block copolymer with the aforementioned catalyst composition. The method includes: subjecting styrenic block copolymer to a hydrogenation process in the presence of a catalyst composition. The styrenic block copolymer can be prepared by polymerizing a conjugated diene monomer with a vinyl aromatics monomer, wherein the conjugated diene monomer can include 1,3-butadiene, 2,3-dimethyl-1,3-butadiene, 3-butyl-1,3-octadiene, isoprene, 1- 1-methylbutadiene, 2-phenyl-1,3-butadiene, or a combinations thereof. The vinyl aromatics monomer can include styrene, methylstyrene (or an isomer thereof), ethylstyrene (or an isomer thereof), cyclohexylstyrene, vinyl biphenyl, 1-vinyl-5-hexyl naphthalene, vinyl naphthalene, vinyl anthracene, or a combinations thereof. For example, the styrenic block copolymer can be styrene-butadiene-styrene triblock copolymer (SBS), styrene-isoprene-styrene triblock copolymer (SIS), styrene-butadiene-styrene-butadiene-styrene pentablock copolymer (SBSBS), or styrene-isoprene-styrene-isoprene-styrene pentablock copolymer (SISIS). The styrenic block copolymer has a weight average molecular weight (Mw) of between 5,000 and 400,000, such as between 5,000 and 300,000 , or between 20,000 and 300,000. The weight average molecular weight of the copolymer can be obtained by calculating the data from the gel permeation chromatography (GPC). According to embodiments of the disclosure, the hydrogenation process has a reaction temperature of between 40°C and 170°C (such as between 60°C and 170°C or between 80°C and 150°C), and the hydrogenation process has a reaction pressure of between 10Kg/cm² and 50Kg/cm² (such as between 20Kg/cm² and 50Kg/cm², or between 30Kg/cm² and 50Kg/cm²).

According to embodiments of the disclosure, the disclosure provides a hydrogenated polymer prepared from the aforementioned method for hydrogenating styrenic block copolymer. The hydrogenated polymer includes a product fabricated by subjecting a styrenic block copolymer to a hydrogenation process in the presence of the aforementioned catalyst composition.

The hydrogenated polymer comprises a first part and a second part, wherein the first part is formed from the conjugated diene monomer, and the second part is formed from the vinyl aromatics monomer. After the hydrogenation process, the first part has a hydrogenation rate equal to or more than 85%, and the second part has a hydrogenation rate between 1-99.9% (1-10%, 10-20%, 20-30%, or 30-99.9%). The hydrogenation rate means the percentage of the hydrogenated olefinic unsaturated double bonds based on the number of the olefinic unsaturated double bonds before hydrogenation. It should be noted that the hydrogenation rate of the second part (formed from the vinyl aromatics monomer) can be adjusted by reaction conditions (reaction temperature, reaction period, or the weight ratio between the catalyst composition and styrenic block copolymer) of the hydrogenation process.

Accordingly, there are equal to or more than 85% of the non-aromatic carbon-carbon conjugated double bonds of the styrenic block copolymer which can be converted to carbon-carbon single bonds, and the hydrogenation rate of the aromatic carbon-carbon conjugated double bond of the styrenic block copolymer can be controlled between 1-99.9% (i.e. 1-10%, 10-20%, 20-30%, or 30-99.9% of the aromatic carbon-carbon conjugated double bonds of the styrenic block copolymer can be converted to carbon-carbon single bonds) after the hydrogenation process in the presence of the catalyst composition of the disclosure. Further, all carbon-carbon conjugated double bonds of the styrenic block copolymer can be converted to carbon-carbon single bonds after the hydrogenation process in the presence of the catalyst composition of the disclosure.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

### Preparation of the catalyst composition

### Preparation Example 1

First, 0.8181g of chloroplatinic acid (H₂PtCl₆, manufactured and sold by Aldrich), 0.1814g of perrhenic acid (HReO₄, manufactured and sold by Aldrich), and 28.595g of titanium dioxide (TiO₂, manufactured and sold by Alfa Aesar) were mixed and dissolved in DI water (300 ml). After stirring for 1hr, the mixture was subjected to the ultrasonic agitation for 0.5 hr. Next, the pH value of the above solution was adjusted to 11-12 by the addition of the NaOH solution, obtaining a first solution. Next, 0.2054g of sodium hypophosphite (NaH2PO2 • H2O, manufactured and sold by SHOWA) was dissolved in DI water (150ml), and the pH value of the above solution was adjusted to 11-12 by the addition of the NaOH solution, obtaining a second solution.

Next, the first solution was mixed with the second solution, and the pH value of the above mixture was adjusted to 11-12. After subjecting to the ultrasonic agitation for 10 min, the mixture was heated under an argon atmosphere at 90°C for 10 hrs. The result was filtered and the filter was collected. Finally, the filter was baked at 105°C for several hrs, obtaining catalyst composition PtReP/TiO₂.

### Selective hydrogenation of SBS

### Example 1

9g of styrene-butadiene-styrene triblock copolymer (SBS)(with a molecular weight of 100,000, the weight ratio between butadiene (reactant) and styrene (reactant) of 60:40) was dissolved in cyclohexane (120g) to obtain a SBS solution with a solid content of 7.5wt%. Next, the SBS solution was disposed into a hydrogenation tank under an argon atmosphere. Next, the catalyst composition PtReP/TiO₂ (0.6g) of Preparation Example 1 was added into the hydrogenation tank, and then the hydrogenation tank was sealed after introducing the hydrogen gas (with a pressure of 40Kg/cm²). After heating the hydrogenation tank to 100°C, the hydrogenation rate (transforming the carbon-carbon double bond into the carbon-carbon single bond) of the butadiene block and the styrene block were determined by H¹-NMR and FT-IR. The measurement of the hydrogenation rate includes dissolving the determinand into d-chloroform (CDCl₃), measuring the integrated area of absorption peak of the double bond and aromatic ring before and after the hydrogenation, and determining the hydrogenation rate by means of the decreased integrated area.

The hydrogenation process had a reaction period of 28.8min, when 99% of the non-aromatic carbon-carbon conjugated double bonds of the styrenic block copolymer were converted to carbon-carbon single bonds. Simultaneously, less than 10% of the aromatic carbon-carbon conjugated double bonds of the styrenic block copolymer were converted to carbon-carbon single bonds. The reaction conditions and results were shown in Table 1.

### Comparative Example 1

The process for Comparative Example 1 was performed as Example 1 except for the substitution of the catalyst composition PtRe/SiO₂ (platinum-rhenium alloy carried in SiO₂ with a weight ratio between PtRe and SiO₂ of 4.5:95.5) for the catalyst composition PtReP/Ti02 of Preparation Example 1.

After heating the hydrogenation tank to 100 °C, the hydrogenation rate (transforming the carbon-carbon double bond into the carbon-carbon single bond) of the butadiene block and the styrene block can be determined by H¹-NMR and FT-IR.

The hydrogenation process had a reaction period of 49.8min, when 98% of the non-aromatic carbon-carbon conjugated double bonds of the styrenic block copolymer were converted to carbon-carbon single bonds. Simultaneously, less than 10% of the aromatic carbon-carbon conjugated double bonds of the styrenic block copolymer were converted to carbon-carbon single bonds. The reaction conditions and results are shown in Table 1.

**Table 1**

| | catalyst composition | hydrogen pressure (Kg/cm²) | temperature (C) | reaction period(min) | hydrogenation rate of non-aromatic carbon-carbon conjugated double bonds | hydrogenation rate of aromatic carbon-carbon conjugated double bonds |
|---|---|---|---|---|---|---|
| Example 1 | PtReP/TiO₂ | 40 | 100 | 28.8 | >99% | <10% |
| Comparative Example 1 | PtRe/SiO₂ | 40 | 100 | 49.8 | 98% | <10% |

As shown in Table 1, in comparison with the catalyst composition including platinum-rhenium alloy, the catalyst composition including the platinum-and-rhenium containing phosphorus compound of the disclosure exhibits higher reactivity and enhances the hydrogenation efficiency (increasing about 1.42times).

Fig. 1 shows the infrared spectra of the styrene-butadiene-styrene (SBS) copolymers of Example 1 and comparative Example 1 measured by Fourier Transform IR (FT-IR) spectrometer before and after the hydrogenation process. As shown in Fig. 1, the styrene-butadiene-styrene (SBS) copolymers have peaks at 968cm⁻¹ and 995cm⁻¹ (representing the trans double bonds), and peaks at 912cm⁻¹ (representing the 1,2-vinyl double bonds) before the hydrogenation process. As shown in Fig. 1, the hydrogenated block copolymers of Comparative Example 1 give an unapparent adsorption peaks for trans- and vinyl double bonds (the peaks at 968cm⁻¹, 995cm⁻¹, and 912cm⁻¹ with lower intensity) after the hydrogenation process. On the other hand, there are essentially no peaks t 968cm⁻¹, 995cm⁻¹, and 912cm⁻¹ of the infrared spectrum of the hydrogenated block copolymers of Example 1, which indicates that carbon-carbon double bonds of the polybutadienes block are mostly hydrogenated.

### Example 2

14.64g of styrene-butadiene-styrene triblock copolymer (SBS) (with a molecular weight of 73,000, the weight ratio between butadiene (reactant) and styrene (reactant) of 71:29) was dissolved in cyclohexane (120g) to obtain a SBS solution with a solid content of 12.2wt%. Next, the SBS solution was disposed into a hydrogenation tank under an argon atmosphere. Next, the catalyst composition PtReP/TiO₂ (0.97g) of Preparation Example 1 was added into the hydrogenation tank, and then the hydrogenation tank was sealed after introducing the hydrogen gas (with a pressure of 40Kg/cm²). After heating the hydrogenation tank to 100°C for 22.8 min, a hydrogenated block copolymer was obtained.

Next, the hydrogenation rate of the butadiene block (non-aromatic carbon-carbon double bonds) and the styrene block (aromatic carbon-carbon double bonds) of the hydrogenated block copolymer were determined by H¹-NMR and FT-IR, and the reaction conditions and results are shown in Table 2.

### Example 3

14.64g of styrene-butadiene-styrene triblock copolymer (SBS) (with a molecular weight of 73,000, the weight ratio between butadiene (reactant) and styrene (reactant) of 71:29) was dissolved in cyclohexane (120g) to obtain a SBS solution with a solid content of 12.2wt%. Next, the SBS solution was disposed into a hydrogenation tank under an argon atmosphere. Next, the catalyst composition PtReP/TiO₂ (0.97g) of Preparation Example 1 was added into the hydrogenation tank, and then the hydrogenation tank was sealed after introducing the hydrogen gas (with a pressure of 40Kg/cm²). After heating the hydrogenation tank to 88°C for 33.6min, a hydrogenated block copolymer was obtained.

Next, the hydrogenation rate of the butadiene block (non-aromatic carbon-carbon double bonds) and the styrene block (aromatic carbon-carbon double bonds) of the hydrogenated block copolymer were determined by H¹-NMR and FT-IR, and the reaction conditions and results were shown in Table 2.

### Example 4

14.64g of styrene-butadiene-styrene triblock copolymer (SBS) (with a molecular weight of 73,000, the weight ratio between butadiene (reactant) and styrene (reactant) of 71:29) was dissolved in cyclohexane (120g) to obtain a SBS solution with a solid content of 12.2wt%. Next, the SBS solution was disposed into a hydrogenation tank under an argon atmosphere. Next, the catalyst composition PtReP/TiO₂ (0.97g) of Preparation Example 1 was added into the hydrogenation tank, and then the hydrogenation tank was sealed after introducing the hydrogen gas (with a pressure of 40Kg/cm²). After heating the hydrogenation tank to 60°C for 36.6min, a hydrogenated block copolymer was obtained.

Next, the hydrogenation rate of the butadiene block (non-aromatic carbon-carbon double bonds) and the styrene block (aromatic carbon-carbon double bonds) of the hydrogenated block copolymer were determined by H¹-NMR and FT-IR, and the reaction conditions and results were shown in Table 2.

### Example 5

14.16g of styrene-butadiene-styrene triblock copolymer (SBS) (with a molecular weight of 73,000, the weight ratio between butadiene (reactant) and styrene (reactant) of 71:29) was dissolved in cyclohexane (120g) to obtain a SBS solution with a solid content of 11.8wt%. Next, the SBS solution was disposed into a hydrogenation tank under an argon atmosphere. Next, the catalyst composition PtReP/TiO₂ (0.94g) of Preparation Example 1 was added into the hydrogenation tank, and then the hydrogenation tank was sealed after introducing the hydrogen gas (with a pressure of 40Kg/cm²). After heating the hydrogenation tank to 170°C for 156min, a hydrogenated block copolymer was obtained.

Next, the hydrogenation rate of the butadiene block (non-aromatic carbon-carbon double bonds) and the styrene block (aromatic carbon-carbon double bonds) of the hydrogenated block copolymer were determined by H¹-NMR and FT-IR, and the reaction conditions and results were shown in Table 2.

### Example 6

18g of styrene-butadiene-styrene triblock copolymer (SBS) (with a molecular weight of 73,000, the weight ratio between butadiene (reactant) and styrene (reactant) of 71:29) was dissolved in cyclohexane (102g) to obtain a SBS solution with a solid content of 17.6wt%. Next, the SBS solution was disposed into a hydrogenation tank under an argon atmosphere. Next, the catalyst composition PtReP/Ti02 (1.2g) of Preparation Example 1 was added into the hydrogenation tank, and then the hydrogenation tank was sealed after introducing the hydrogen gas (with a pressure of 40Kg/cm²). After heating the hydrogenation tank to 170°C for 120min, a hydrogenated block copolymer was obtained.

Next, the hydrogenation rate of the butadiene block (non-aromatic carbon-carbon double bonds) and the styrene block (aromatic carbon-carbon double bonds) of the hydrogenated block copolymer were determined by H¹-NMR and FT-IR, and the reaction conditions and results were shown in Table 2.

### Example 7

18g of styrene-butadiene-styrene triblock copolymer (SBS) (with a molecular weight of 265,000, the weight ratio between butadiene (reactant) and styrene (reactant) of 68:32) was dissolved in cyclohexane (102g) to obtain a SBS solution with a solid content of 17.6wt%. Next, the SBS solution was disposed into a hydrogenation tank under an argon atmosphere. Next, the catalyst composition PtReP/Ti02 (1.2g) of Preparation Example 1 was added into the hydrogenation tank, and then the hydrogenation tank was sealed after introducing the hydrogen gas (with a pressure of 40Kg/cm²). After heating the hydrogenation tank to 170°C for 240min, a hydrogenated block copolymer was obtained.

Next, the hydrogenation rate of the butadiene block (non-aromatic carbon-carbon double bonds) and the styrene block (aromatic carbon-carbon double bonds) of the hydrogenated block copolymer were determined by H¹-NMR and FT-IR, and the reaction conditions and results were shown in Table 2.

**Table 2**

| | catalyst composition | molecular weight | temperature (°C) | reaction period (min) | hydrogenation rate of non-aromatic carbon-carbon conjugated double bonds | hydrogenation rate of aromatic carbon-carbon conjugated double bonds |
|---|---|---|---|---|---|---|
| Example 2 | PtReP/TiO₂ | 73,000 | 100 | 22.8 | >99% | 29.3% |
| Example 3 | PtReP/TiO₂ | 73,000 | 88 | 33.6 | >99% | 20.4% |
| Example 4 | PtReP/TiO₂ | 73,000 | 60 | 36.6 | >99% | 12.3% |
| Example 5 | PtReP/TiO₂ | 73,000 | 170 | 156 | >99% | >99% |
| Example 6 | PtReP/TiO₂ | 73,000 | 170 | 120 | 96% | 73% |
| Example 7 | PtReP/TiO₂ | 265,000 | 170 | 240 | 94% | 53% |

As shown in Table 2, the hydrogenation rate of aromatic carbon-carbon conjugated double bonds can be reduced by decreasing the reaction temperature (or decreasing the reaction period), under the same other reaction conditions. On the other hand, the hydrogenation rate of aromatic carbon-carbon conjugated double bonds can be increased by increasing the reaction temperature (or increasing the reaction period), under the same reaction conditions.

Furthermore, the hydrogenation rate of aromatic carbon-carbon conjugated double bonds can be decreased by increasing the molecular weight of the styrene-butadiene-styrene triblock copolymer (SBS), under the same other reaction conditions. Accordingly, in the method for hydrogenating styrenic block copolymer employing the catalyst composition of the disclosure, the hydrogenation rate of styrene block (the hydrogenation rate of aromatic carbon-carbon conjugated double bonds) and the hydrogenation rate of butadiene block (the hydrogenation rate of non-aromatic carbon-carbon conjugated double bonds) can be controlled by modifying the reaction conditions of the hydrogenation process (such as reaction period or temperature).

### Selective hydrogenation of SIS

### Example 8

18g of styrene-isoprene-styrene triblock copolymer (SIS) (with a molecular weight of 120,000, the weight ratio between butadiene (reactant) and styrene (reactant) of 70:30) was dissolved in cyclohexane (102g) to obtain a SBS solution with a solid content of 17.6wt%. Next, the SBS solution was disposed into a hydrogenation tank under an argon atmosphere. Next, the catalyst composition PtReP/Ti02 (1.2g) of Preparation Example 1 was added into the hydrogenation tank, and then the hydrogenation tank was sealed after introducing the hydrogen gas (with a pressure of 40Kg/cm²). After heating the hydrogenation tank to 170°C for 240min, a hydrogenated block copolymer was obtained.

Next, the hydrogenation rate of the isoprene block (non-aromatic carbon-carbon double bonds) and the styrene block (aromatic carbon-carbon double bonds) of the hydrogenated block copolymer were determined by H¹-NMR and FT-IR, and the reaction conditions and results were shown in Table 3.

### Example 9

18g of styrene-isoprene-styrene triblock copolymer (SIS) (with a molecular weight of 120,000, the weight ratio between butadiene (reactant) and styrene (reactant) of 70:30) was dissolved in cyclohexane (102g) to obtain a SBS solution with a solid content of 17.6wt%. Next, the SBS solution was disposed into a hydrogenation tank under an argon atmosphere. Next, the catalyst composition PtReP/Ti02 (1.2g) of Preparation Example 1 was added into the hydrogenation tank, and then the hydrogenation tank was sealed after introducing the hydrogen gas (with a pressure of 40Kg/cm²). After heating the hydrogenation tank to 170°C for 360min, a hydrogenated block copolymer was obtained.

Next, the hydrogenation rate of the isoprene block (non-aromatic carbon-carbon double bonds) and the styrene block (aromatic carbon-carbon double bonds) of the hydrogenated block copolymer were determined by H¹-NMR and FT-IR, and the reaction conditions and results were shown in Table 3.

**Table 3**

| | catalyst composition | hydrogen pressure (Kg/cm²) | temperature (C) | reaction period (min) | hydrogenation rate of non-aromatic carbon-carbon conjugated double bonds | hydrogenation rate of aromatic carbon-carbon conjugated double bonds |
|---|---|---|---|---|---|---|
| Example 8 | PtReP/TiO₂ | 40 | 170 | 240 | 95 | 94 |
| Example 9 | PtReP/TiO₂ | 40 | 170 | 360 | 98 | 97 |

As shown in Table 3, the catalyst composition of the disclosure can also be used in the hydrogenation process of the styrene-isoprene-styrene triblock copolymer (SIS) with a very high hydrogenation rate of styrene block (the hydrogenation rate of aromatic carbon-carbon conjugated double bonds) and a very high hydrogenation rate of isoprene block (the hydrogenation rate of non-aromatic carbon-carbon conjugated double bonds).

It will be apparent to those skilled in the art that various modifications and variations can be made to the disclosed embodiments. It is intended that the specification and examples be considered as exemplary only, with a true scope of the disclosure being indicated by the following claims and their equivalents.

### Further aspects of the invention are:

Aspect 1. A catalyst composition, for hydrogenating a styrenic block copolymer, comprising:
   an oxide carrier ; and
   a catalyst disposed on the oxide carrier, wherein the catalyst comprises a platinum-and-rhenium containing phosphorus compound.
Aspect 2. The catalyst composition according to aspect 1, wherein the oxide carrier comprises titanium oxide, aluminum oxide, zirconium oxide, or a combination thereof.
Aspect 3. The catalyst composition according to aspect 1, wherein the styrenic block copolymer is formed by polymerizing a conjugated diene monomer and a vinyl aromatics monomer.
Aspect 4. The catalyst composition according to aspect 3, wherein the conjugated diene monomer comprises 1,3-butadiene, 2,3-dimethyl-1,3-butadiene, 3-butyl-1,3-octadiene, isoprene, 1-methylbutadiene, 2-phenyl-1,3-butadiene, or a combinations thereof.
Aspect 5. The catalyst composition according to aspect 3, wherein the vinyl aromatics monomer comprises styrene, methylstyrene, ethylstyrene, cyclohexylstyrene, vinyl biphenyl, 1-vinyl-5-hexyl naphthalene, vinyl naphthalene, vinyl anthracene, or a combinations thereof.
Aspect 6. The catalyst composition according to aspect 3, wherein the styrenic block copolymer comprises styrene-butadiene-styrene triblock copolymer, styrene-isoprene-styrene triblock copolymer, styrene-butadiene-styrene-butadiene-styrene pentablock copolymer, or styrene-isoprene-styrene-isoprene-styrene pentablock copolymer.
Aspect 7. The catalyst composition according to aspect 1, wherein the catalyst has a weight percentage of between 0.5wt% and 9.0wt%, based on the weight of the catalyst composition.
Aspect 8. The catalyst composition according to aspect 1, wherein the ratio between the platinum and rhenium in the catalyst is from 10:1 to 1:1.
Aspect 9. A method for hydrogenating styrenic block copolymer, comprising:
   subjecting a styrenic block copolymer to a hydrogenation process in the presence of a catalyst composition, wherein the catalyst composition comprises an oxide carrier, and a catalyst disposed on the oxide carrier, and wherein the catalyst comprises platinum-and-rhenium containing phosphorus compound.
Aspect 10. The method for hydrogenating styrenic block copolymer according to aspect 9, wherein the oxide carrier comprises titanium oxide, aluminum oxide, zirconium oxide, or a combination thereof.
Aspect 11. The method for hydrogenating styrenic block copolymer according to aspect 9, wherein the hydrogenating styrenic block copolymer is formed by polymerizing a conjugated diene monomer and a vinyl aromatics monomer.
Aspect 12. The method for hydrogenating styrenic block copolymer according to aspect 11, wherein the conjugated diene monomer comprises 1,3-butadiene, 2,3-dimethyl-1,3-butadiene, 3-butyl-1,3-octadiene, isoprene, 1-methylbutadiene, 2-phenyl-1,3-butadiene, or a combinations thereof.
Aspect 13. The method for hydrogenating styrenic block copolymer according to aspect 11, wherein the vinyl aromatics monomer comprises styrene, methylstyrene, ethylstyrene, cyclohexylstyrene, vinyl biphenyl, 1-vinyl-5-hexyl naphthalene, vinyl naphthalene, vinyl anthracene, or a combinations thereof.
Aspect 14. The method for hydrogenating styrenic block copolymer according to aspect 11, wherein the styrenic block copolymer comprises styrene-butadiene-styrene triblock copolymer, styrene-isoprene-styrene triblock copolymer, styrene-butadiene-styrene-butadiene-styrene pentablock copolymer, or styrene-isoprene-styrene-isoprene-styrene pentablock copolymer.
Aspect 15. The method for hydrogenating styrenic block copolymer according to aspect 9, wherein the catalyst has a weight percentage of between 0.5wt% and 9.0wt%, based on the weight of the catalyst composition.
Aspect 16. The method for hydrogenating styrenic block copolymer according to aspect 9, wherein the catalyst the ratio between the platinum and rhenium in the catalyst is from 10:1 to 1:1.
Aspect 17. The method for hydrogenating styrenic block according to aspect 11, wherein the hydrogenated polymer comprises a first part and a second part, wherein the first part is formed from the conjugated diene monomer and the first part has a hydrogenation rate equal to or more than 85%, and the second part is formed from the vinyl aromatics monomer and the second part has a hydrogenation rate between 1-99.9%.
Aspect 18. The method for hydrogenating styrenic block copolymer according to aspect 11, wherein the hydrogenated polymer comprises a first part and a second part, wherein the first part is formed from the conjugated diene monomer and the firstparthas a hydrogenation rate equal to or more than 85%, and the second part is formed from the vinyl aromatics monomer and the second part has a hydrogenation rate between 1-10%, 10-20%, 20-30%, or 30-99.9%.
Aspect 19. A hydrogenated polymer, comprising a product fabricated by the following steps:
   subjecting a styrenic block copolymer to a hydrogenation process in the presence of a catalyst composition, obtaining the hydrogenated polymer, wherein the catalyst composition comprises an oxide carrier, and a catalyst disposed on the oxide carrier, and wherein the catalyst comprises platinum-and-rhenium containing phosphorus compound.
Aspect 20. The hydrogenated polymer according to aspect 19, wherein the styrenic block copolymer is formed by polymerizing a conjugated diene monomer and a vinyl aromatics monomer, and the hydrogenated polymer comprising a first part and a second part, wherein the first part is formed from the conjugated diene monomer and the firstparthas a hydrogenation rate equal to or more than 85%, and the second part is formed from the vinyl aromatics monomer and the second part has a hydrogenation rate between 1-99.9%.
Aspect 21. The hydrogenated polymer according to aspect 19, wherein the styrenic block copolymer is formed by polymerizing a conjugated diene monomer and a vinyl aromatics monomer, and the hydrogenated polymer comprising a first part and a second part, wherein the first part is formed from the conjugated diene monomer and the firstparthas a hydrogenation rate equal to or more than 85%, and the second part is formed from the vinyl aromatics monomer and the second part has a hydrogenation rate between 1-10%, 10-20%, 20-30%, or 30-99.9%.

## Claims

1. A catalyst composition, for hydrogenating a styrenic block copolymer, comprising:
an oxide carrier ; and
a catalyst disposed on the oxide carrier, wherein the catalyst consists of a platinum-and-rhenium containing phosphorus compound.

2. The catalyst composition as claimed in claim 1, wherein the oxide carrier comprises titanium oxide, aluminum oxide, zirconium oxide, silicon oxide, or a combination thereof.

3. The catalyst composition as claimed in claim 1 or 2, wherein the catalyst has a weight percentage of between 0.5wt% and 9.0wt%, based on the weight of the catalyst composition.

4. The catalyst composition as claimed in claim 1 to 3, wherein the weight ratio between the platinum and rhenium in the catalyst is from 10:1 to 1:1.

5. A method for hydrogenating a styrenic block copolymer, comprising:
subjecting a styrenic block copolymer to a hydrogenation process in the presence of a catalyst composition as claimed in claims 1 to 4.

6. The method as claimed in claim 5, wherein the styrenic block copolymer is formed by polymerizing a conjugated diene monomer and a vinyl aromatic hydrocarbon monomer.

7. The method as claimed in claim 6 wherein the conjugated diene monomer comprises 1,3-butadiene, 2,3-dimethyl-1,3-butadiene, 3-butyl-1,3-octadiene, isoprene, 1-methylbutadiene, 2-phenyl-1,3-butadiene, or a combinations thereof.

8. The method as claimed in claim 6 or 7, wherein the vinyl aromatic hydrocarbon monomer comprises styrene, methylstyrene, ethylstyrene, cyclohexylstyrene, vinyl biphenyl, 1-vinyl-5-hexyl naphthalene, vinyl naphthalene, vinyl anthracene, or a combinations thereof.

9. The method as claimed in claim 5 to 8, wherein the styrenic block copolymer comprises styrene-butadiene-styrene triblock copolymer, styrene-isoprene-styrene triblock copolymer, styrene-butadiene-styrene-butadiene-styrene pentablock copolymer, or styrene-isoprene-styrene-isoprene-styrene pentablock copolymer.

10. The method as claimed in claim 5 to 9, wherein the hydrogenation conversion of the non-aromatic double bonds of the styrenic block copolymer is equal to or more than 85%, and the hydrogenation conversion of the aromatic double bonds of the styrenic block copolymer is of between 1% and 99%.

11. The method as claimed in claim 5 to 10, wherein the hydrogenation conversion of the non-aromatic double bonds of the styrenic block copolymer is equal to or more than 85%, and the hydrogenation conversion of the aromatic double bonds of the styrenic block copolymer is of between 1-10%, 10-20%, 20-30%, or 30-99.9%.
